(19) Europäisches Patentamt
European Patent Office
Office européen des brevets

(11) EP 4 717 720 A1

(12) **EUROPEAN PATENT APPLICATION**
published in accordance with Art. 153(4) EPC

(43) Date of publication:
**01.04.2026 Bulletin 2026/14**

(21) Application number: **24825954.1**

(22) Date of filing: **19.06.2024**

(51) International Patent Classification (IPC):
***C08G 18/80*** *(2006.01)* ***B01J 31/02*** *(2006.01)*
***C08G 18/18*** *(2006.01)* ***C09D 175/04*** *(2006.01)*

(52) Cooperative Patent Classification (CPC):
**B01J 31/02; C08G 18/18; C08G 18/80; C09D 7/63; C09D 175/04**

(86) International application number:
**PCT/JP2024/022287**

(87) International publication number:
**WO 2024/262553 (26.12.2024 Gazette 2024/52)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **21.06.2023 JP 2023101613**
**29.09.2023 JP 2023170696**

(71) Applicant: **Tosoh Corporation**
**Yamaguchi 746-8501 (JP)**

(72) Inventors:
- **NOGUCHI, Shuto**
**Yokkaichi-shi, Mie 510-8540 (JP)**
- **NAKASHIMA, Yuji**
**Yokkaichi-shi, Mie 510-8540 (JP)**
- **OYAMA, Takafumi**
**Yokkaichi-shi, Mie 510-8540 (JP)**
- **YASUDA, Akihiro**
**Yokkaichi-shi, Mie 510-8540 (JP)**

(74) Representative: **TBK**
**Bavariaring 4-6**
**80336 München (DE)**

(54) **CATALYST COMPOSITION, BLOCKED POLYISOCYANATE COMPOSITION, COATING MATERIAL COMPOSITION, COATING FILM, AND METHOD FOR FORMING COATING FILM**

(57) A catalyst composition used for dissociating a blocking agent from a blocked polyisocyanate, containing a quaternary ammonium salt and a carbonate diester compound.



Processed by Luminess, 75001 PARIS (FR)

## Description

### Technical Field

The present disclosure relates to a catalyst composition, a blocked polyisocyanate composition, a coating material composition, a coating film, and a method for forming a coating film.

### Background Art

Conventionally, polyisocyanate has been known as a curing agent used for coating materials and the like. For example, it is known that a polyurethane resin coating material combining a polyol and a polyisocyanate has very excellent abrasion resistance, chemical resistance, and stain resistance.

A coating material using a polyisocyanate as a curing agent is generally a two-component composition, and is used by storing a main agent (for example, a polyol) and a polyisocyanate separately and mixing them at the time of coating. However, since the once-mixed coating material cures in a short time, the pot life is short, and there has been a problem in terms of workability during coating. In addition, since polyisocyanate and water react easily, it has been impossible to use the above-described coating material for a water-based coating material such as an electrodeposition coating.

As a method for addressing these problems, a method of inactivating a polyisocyanate by reacting it with a blocking agent is known. The blocked polyisocyanate obtained by this method does not react with a main agent (polyol or the like) at room temperature, but when heated, the blocking agent dissociates to regenerate isocyanate groups, which react with the main agent to form cross-links. Therefore, according to the above-described method, the pot life is not limited, it becomes possible to prepare a coating material by mixing a main agent and a curing agent in advance, and application of the polyisocyanate to a water-based coating material also becomes possible.

As a catalyst for dissociating a blocking agent from a blocked polyisocyanate (a deblocking catalyst), for example, a quaternary ammonium salt is known (see Patent Literature 1).

### Citation List

### Patent Literature

Patent Literature 1: JP H08-170048 A

### Summary of Invention

### Technical Problem

According to the above-described quaternary ammonium salt, low-temperature curability can be imparted to a coating material composition including a blocked polyisocyanate. On the other hand, a quaternary ammonium salt is prone to color change (for example, yellowing) over time, and the quaternary ammonium salt after the color change may cause coloration of a coating film. Although Patent Literature 1 above describes that a cured resin using a specific quaternary ammonium salt is superior in yellowing resistance compared to a cured resin using an organometallic-based catalyst, there is no description about the color change of the quaternary ammonium salt over time.

Therefore, an object of one aspect of the present disclosure is to provide a catalyst composition that can not only impart low-temperature curability to a coating material composition including a blocked polyisocyanate, but is also less likely to cause a color change over time.

### Solution to Problem

As a result of studies by the inventors of the present disclosure, it has been surprisingly found that the color change of a quaternary ammonium salt over time is suppressed in a mixture of the quaternary ammonium salt and a carbonate diester compound. The present disclosure has been made based on the findings of the above-described inventors.

The present disclosure provides at least the following [1] to [12].

[1] A catalyst composition used for dissociating a blocking agent from a blocked polyisocyanate,
containing a quaternary ammonium salt and a carbonate diester compound.
[2] The catalyst composition according to [1], wherein a ratio of a content of the carbonate diester compound to a

content of the quaternary ammonium salt is 0.05 to 50 in mass ratio.

[3] The catalyst composition according to [1] or [2], wherein the quaternary ammonium salt includes a quaternary ammonium cation represented by the following formula (1):

[Chem. 1]

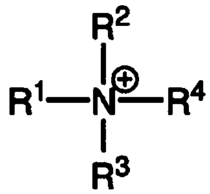

(1)

[In formula (1), $R^1$ represents an alkyl group having 1 to 16 carbon atoms which may have a hydroxy group, an amino group, or an alkoxy group as a substituent, and $R^2$ to $R^4$ each independently represent an alkyl group having 1 to 8 carbon atoms.]

[4] The catalyst composition according to any one of [1] to [3], wherein the carbonate diester compound includes a compound represented by the following formula (2):

[Chem. 2]

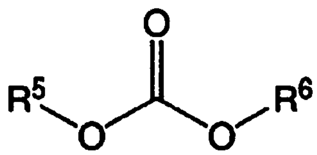

(2)

[In formula (2), $R^5$ and $R^6$ each independently represent an aliphatic saturated hydrocarbon group having 1 to 16 carbon atoms, and $R^5$ and $R^6$ may be linked to each other to form a ring.]

[5] The catalyst composition according to any one of [1] to [4], further containing an alcohol compound.

[6] A blocked polyisocyanate composition, including a blocked polyisocyanate and the catalyst composition according to any one of [1] to [5].

[7] The blocked polyisocyanate composition according to [6], wherein a content of the quaternary ammonium salt is 0.0001 to 40 parts by mass with respect to 100 parts by mass of the blocked polyisocyanate.

[8] The blocked polyisocyanate composition according to [6] or [7], wherein the blocked polyisocyanate includes a structure derived from an aliphatic polyisocyanate having 4 to 6 carbon atoms or a derivative thereof.

[9] The blocked polyisocyanate composition according to any one of [6] to [8], wherein the blocked polyisocyanate has at least one group selected from the group consisting of an isocyanate group blocked with an oxime-based blocking agent and an isocyanate group blocked with a pyrazole-based blocking agent.

[10] A coating material composition including a main agent and a curing agent, wherein

the curing agent includes a blocked polyisocyanate, and the main agent or the curing agent includes the catalyst composition according to any one of [1] to [5], or
the curing agent includes the blocked polyisocyanate composition according to any one of [6] to [9].

[11] A coating film formed from the coating material composition according to [10].

[12] A method for forming a coating film, including a step of applying the coating material composition according to [10] to an object to be coated and curing a coating film composed of the coating material composition by heating at 60 to 100°C.

## Advantageous Effects of Invention

According to one aspect of the present disclosure, it is possible to provide a catalyst composition that can not only impart low-temperature curability to a coating material composition including a blocked polyisocyanate, but is also less likely to cause a color change over time.

**Description of Embodiments**

Hereinafter, exemplary embodiments of the present disclosure will be described. However, the present disclosure is not limited to the following embodiments in any way. In the present specification, a numerical range indicated using "to" indicates a range including the numerical values described before and after "to" as a minimum value and a maximum value, respectively. In addition, unless otherwise specified, the units of the numerical values described before and after "to" are the same. In addition, the upper limit values and lower limit values described individually can be arbitrarily combined.

<Catalyst Composition>

One embodiment of the present disclosure is a catalyst composition containing a quaternary ammonium salt and a carbonate diester compound. The catalyst composition is used for dissociating a blocking agent from a blocked polyisocyanate.

According to the above-described catalyst composition, low-temperature curability can be imparted to a coating material composition including a blocked polyisocyanate. Furthermore, the above-described catalyst composition is less likely to cause a color change (for example, yellowing) over time, and can contribute to a reduction in color change during the production of a coating film (before and after curing of the coating film). Therefore, according to the above-described catalyst composition, a coating film with little coloration can be easily formed.

(Quaternary Ammonium Salt)

The quaternary ammonium salt includes a quaternary ammonium cation as a cation group. As the quaternary ammonium salt, a compound known as a deblocking catalyst can be used.

The quaternary ammonium cation is represented, for example, by the following formula (1).

[Chem. 3]

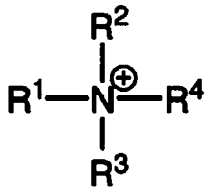

(1)

In formula (1), $R^1$ to $R^4$ each independently represent a hydrocarbon group. $R^1$ to $R^4$ may be the same as or different from each other.

The hydrocarbon group may be an aliphatic hydrocarbon group (for example, an alkyl group or a cycloalkyl group), or may be an aromatic hydrocarbon group (for example, an aryl group). From the viewpoint of enhancing the effect of improving low-temperature curability and the effect of reducing color change over time and coloration of the coating film, the hydrocarbon group may be an aliphatic hydrocarbon group. Among these, when the aliphatic hydrocarbon group is an alkyl group, the above-described effects tend to be further enhanced.

When the hydrocarbon group is an aliphatic hydrocarbon group, the number of carbon atoms thereof is, for example, 1 to 16. The number of carbon atoms of the aliphatic hydrocarbon group may be 3 or more or 6 or more, and may be 12 or less or 8 or less. When the hydrocarbon group is an aromatic hydrocarbon group, the number of carbon atoms thereof is, for example, 6 to 16. The number of carbon atoms of the aromatic hydrocarbon group may be 8 or more or 10 or more, and may be 14 or less or 12 or less.

The hydrocarbon group may have a substituent. Examples of the substituent include a hydroxy group, an amino group, an alkoxy group, and the like. The number of carbon atoms of the alkoxy group may be, for example, 1 to 8, 1 to 6, 1 to 4, or 1 to 2. Examples of the alkoxy group include a methoxy group, an ethoxy group, a butoxy group, a propyloxy group, a pentyloxy group, a hexyloxy group, and the like. The number of substituents may be, for example, 0 to 3. The number of carbon atoms of the substituent is to be included in the number of carbon atoms of the hydrocarbon group.

In one embodiment, $R^1$ in formula (1) represents an alkyl group having 1 to 16 carbon atoms which may have a hydroxy group, an amino group, or an alkoxy group as a substituent, and $R^2$ to $R^4$ each independently represent an alkyl group having 1 to 8 carbon atoms. When such a quaternary ammonium salt is used, a coating material composition having more excellent low-temperature curability is likely to be obtained.

Specific examples of the alkyl group represented by $R^1$ include a methyl group, an ethyl group, an n-propyl group,

an isopropyl group, an n-butyl group, an isobutyl group, a t-butyl group, an n-pentyl group, an n-hexyl group, an n-heptyl group, an n-octyl group, a 2-ethylhexyl group, a 2-propylheptyl group, a nonyl group, a decyl group, an isodecyl group, a dodecyl group, a hexadecyl group, and the like. These groups may be substituted with one or two or more substituents (for example, a hydroxy group, an amino group, or an alkoxy group).

From the viewpoint of making it easier to obtain a coating material composition having even more excellent low-temperature curability, $R^1$ in formula (1) may be an alkyl group having 1 to 16 carbon atoms having no substituent or a hydroxyalkyl group. Among these, when $R^1$ is an alkyl group having 1 to 16 carbon atoms having no substituent, the effect of improving low-temperature curability tends to be further enhanced. From the viewpoint of further enhancing this effect, the alkyl group having 1 to 16 carbon atoms having no substituent is preferably an alkyl group having 1 to 10 carbon atoms. When the alkyl group having 1 to 16 carbon atoms having no substituent is an alkyl group having 1 to 4 carbon atoms, the above-described effect becomes more remarkable. On the other hand, when the alkyl group having 1 to 16 carbon atoms having no substituent is an alkyl group having 4 to 8 carbon atoms, the effect of reducing color change over time and coloration of the coating film tends to be higher. This tendency is remarkable when the alkyl group is an alkyl group having 6 to 8 carbon atoms (particularly an n-octyl group).

Specific examples of the alkyl group represented by $R^2$ to $R^4$ include a methyl group, an ethyl group, an n-propyl group, an isopropyl group, an n-butyl group, an isobutyl group, a t-butyl group, an n-pentyl group, an n-hexyl group, an n-heptyl group, an n-octyl group, a 2-ethylhexyl group, and the like.

From the viewpoint of making it easier to obtain a coating material composition having even more excellent low-temperature curability, $R^2$ to $R^4$ in formula (1) may be an alkyl group having 1 to 4 carbon atoms. The alkyl group having 1 to 4 carbon atoms is preferably an alkyl group having 1 to 2 carbon atoms, and more preferably a methyl group, from the viewpoint of further enhancing the effect of improving low-temperature curability.

From the above-described viewpoint, the quaternary ammonium cation may be a cation in which $R^1$ in formula (1) is an alkyl group having 1 to 10 carbon atoms, and $R^2$ to $R^4$ are an alkyl group having 1 to 4 carbon atoms. Suitable specific examples of such a cation include a trimethylmono-n-octylammonium cation, a trimethylmono-n-butylammonium cation, a tetramethylammonium cation, and a tetrabutylammonium cation, and among these, a trimethylmono-n-octylammonium cation is preferable.

The anion group of the quaternary ammonium salt may be a group composed of an anion derived from an acid such as an organic acid or an inorganic acid, or may be a group composed of an anion derived from an ester such as a carbonate ester. The anion group of the quaternary ammonium salt may be a group that is not classified into any of these (for example, a hydroxyl group (hydroxide ion)).

Examples of the group composed of an anion derived from an organic acid (organic acid group) include a fatty acid group. The number of carbon atoms of the fatty acid group (aliphatic monocarboxylic acid group) may be, for example, 1 to 12, and may be 1 to 7 or 1 to 3. Specific examples of the fatty acid group include a formate group, an acetate group, a 2-ethylhexanoate group (octoate group), a laurate group, a cyclohexanecarboxylate group, a pivalate group, and the like.

Examples of the group composed of an anion derived from an inorganic acid (inorganic acid group) include a halogen group (fluoro group, chloro group, bromo group, and the like), a hydrogen carbonate group, and a carbonate group.

Examples of the group composed of an anion derived from an ester (ester group) include a monoalkyl carbonate group. The number of carbon atoms of the alkyl group in the monoalkyl carbonate group may be, for example, 1 to 8, and may be 1 to 4 or 1 to 2. Specific examples of the monoalkyl carbonate group include a methyl carbonate group, an ethyl carbonate group, a propyl carbonate group, a butyl carbonate group, and the like.

The anion group of the quaternary ammonium salt may be a fatty acid group having 1 to 12 carbon atoms, a monoalkyl carbonate group having an alkyl group of 1 to 8 carbon atoms, or a hydroxyl group, from the viewpoint of making it easier to obtain a coating material composition having more excellent low-temperature curability. The anion group may be a fatty acid group having 1 to 7 carbon atoms or a monoalkyl carbonate group having an alkyl group of 1 to 4 carbon atoms from the viewpoint of further enhancing the effect of improving low-temperature curability, and may be a monoalkyl carbonate group having an alkyl group of 1 to 2 carbon atoms from the viewpoint of further enhancing this effect.

From the above-described viewpoint, the quaternary ammonium salt may be composed of a combination of a quaternary ammonium cation represented by the above formula (1), wherein $R^1$ in formula (1) represents an alkyl group having 1 to 16 carbon atoms which may have a hydroxy group, an amino group, or an alkoxy group as a substituent, and $R^2$ to $R^4$ each independently represent an alkyl group having 1 to 8 carbon atoms, and a fatty acid group having 1 to 12 carbon atoms, a monoalkyl carbonate group having an alkyl group of 1 to 8 carbon atoms, or a hydroxyl group. Among these, a combination of a cation in which $R^1$ is an alkyl group having 1 to 10 carbon atoms and $R^2$ to $R^4$ are an alkyl group having 1 to 4 carbon atoms, and a monoalkyl carbonate group having an alkyl group of 1 to 8 carbon atoms or a hydroxyl group is preferable, and a combination of a cation in which $R^1$ is an alkyl group having 4 to 8 carbon atoms and $R^2$ to $R^4$ are an alkyl group having 1 to 2 carbon atoms, and a monoalkyl carbonate group having an alkyl group of 1 to 8 carbon atoms is more preferable.

Specific examples of the quaternary ammonium salt include trimethylmono-n-octylammonium hydrogen carbonate, trimethylmono-n-octylammonium methyl carbonate, trimethylmono-n-octylammonium carbonate, trimethylmono-n-butylammonium methyl carbonate, trimethylmono-n-butylammonium acetate, tetramethylammonium acetate, hexadecyltrimethylammonium hydroxide, tetramethylammonium hydroxide, tetraethylammonium hydroxide, tetrapropylammonium hydroxide, tetrabutylammonium hydroxide, trimethyl(2-hydroxypropyl)ammonium 2-ethylhexanoate, tetramethylammonium hydrogen carbonate, tetraethylammonium hydrogen carbonate, tetra-n-propylammonium hydrogen carbonate, tetra-n-butylammonium hydrogen carbonate, triethylmonomethylammonium hydrogen carbonate, tri-n-propylmonomethylammonium hydrogen carbonate, tri-n-butylmonomethylammonium hydrogen carbonate, tri-n-butylmonoethylammonium hydrogen carbonate, tetramethylammonium monomethyl carbonate, tetraethylammonium monoethyl carbonate, tetra-n-butylammonium monobutyl carbonate, triethylmonomethylammonium monomethyl carbonate, tri-n-propylmonomethylammonium monomethyl carbonate, tri-n-butylmonomethylammonium monomethyl carbonate, tri-n-butylmonoethylammonium monoethyl carbonate, tetramethylammonium carbonate, and tetra-n-butylammonium carbonate.

The quaternary ammonium salt included in the catalyst composition may be one type or two or more types.

The content of the quaternary ammonium salt, from the viewpoint of making it easier to obtain a coating material composition having more excellent low-temperature curability, may be 1 mass% or more, and may be 5 mass% or more, 10 mass% or more, 20 mass% or more, or 30 mass% or more, based on the total mass of the catalyst composition. The content of the quaternary ammonium salt, from the viewpoint of further reducing color change over time and coloration of the coating film, may be 99 mass% or less, and may be 95 mass% or less, 90 mass% or less, 60 mass% or less, 40 mass% or less, 20 mass% or less, or 10 mass% or less, based on the total mass of the catalyst composition. From these viewpoints, the content of the quaternary ammonium salt may be, for example, 1 to 99 mass%, and may be 5 to 99 mass%, 10 to 99 mass%, 20 to 95 mass%, 30 to 90 mass%, 1 to 60 mass%, 1 to 40 mass%, 1 to 20 mass%, or 1 to 10 mass%, based on the total mass of the catalyst composition.

(Carbonate Diester Compound)

The carbonate diester compound is, for example, a compound represented by the following formula (2).

[Chem. 4]

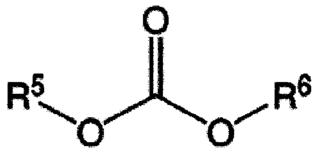

(2)

In formula (2), $R^5$ and $R^6$ each independently represent a hydrocarbon group, and $R^5$ and $R^6$ may be linked to each other to form a ring. $R^5$ and $R^6$ may be the same as or different from each other.

The hydrocarbon group may be an aliphatic hydrocarbon group (for example, an alkyl group, an alkylene group, a cycloalkyl group, or a cycloalkylene group), or may be an aromatic hydrocarbon group (for example, an aryl group or an arylene group). Among these, when the hydrocarbon group is an aliphatic hydrocarbon group, the effect of reducing color change over time and coloration of the coating film tends to be further enhanced. From the viewpoint of further enhancing this effect, the hydrocarbon group may be an aliphatic saturated hydrocarbon group.

When the hydrocarbon group is an aliphatic hydrocarbon group, the number of carbon atoms thereof is, for example, 1 to 16. The number of carbon atoms of the aliphatic hydrocarbon group may be 1 or more or 2 or more, and may be 12 or less or 8 or less. When the hydrocarbon group is an aromatic hydrocarbon group, the number of carbon atoms thereof is, for example, 6 to 16. The number of carbon atoms of the aromatic hydrocarbon group may be 8 or more or 10 or more, and may be 14 or less or 12 or less.

The hydrocarbon group may have a substituent. Examples of the substituent include a hydroxy group, an amino group, an alkoxy group, and the like. The number of carbon atoms of the alkoxy group may be, for example, 1 to 8, 1 to 6, 1 to 4, or 1 to 2. Examples of the alkoxy group include a methoxy group, an ethoxy group, a butoxy group, a propyloxy group, a pentyloxy group, a hexyloxy group, and the like. The number of substituents may be, for example, 0 to 3.

In one embodiment, $R^5$ and $R^6$ in formula (2) are each independently an aliphatic saturated hydrocarbon group having 1 to 16 carbon atoms. When such a carbonate diester compound is used, color change over time and coloration of the coating film can be further reduced.

The aliphatic saturated hydrocarbon groups of $R^5$ and $R^6$ may be alkyl groups. Specific examples of the alkyl group include a methyl group, an ethyl group, an n-propyl group, an isopropyl group, an n-butyl group, an isobutyl group, an s-butyl group, a t-butyl group, an n-pentyl group, an n-hexyl group, an n-heptyl group, an n-octyl group, a 2-ethylhexyl group, a 2-propylheptyl group, a nonyl group, a decyl group, an isodecyl group, a dodecyl group, a hexadecyl group, and

the like.

The aliphatic saturated hydrocarbon groups of $R^5$ and $R^6$ may be linked to each other to form an alkylene group. Specific examples of the alkylene group formed by linking $R^5$ and $R^6$ to each other include an ethylene group, a 1,2-propylene group, a 1,2-butylene group, a 2,3-butylene group, and the like.

From the viewpoint of enhancing the effect of reducing color change over time and coloration of the coating film, $R^5$ and $R^6$ may each independently be an alkyl group having 1 to 4 carbon atoms (methyl group, ethyl group, n-propyl group, isopropyl group, n-butyl group, isobutyl group, s-butyl group, or t-butyl group). The above-described effect tends to be higher when $R^5$ and $R^6$ are an alkyl group having 1 to 2 carbon atoms (methyl group or ethyl group), and tends to be even higher when $R^5$ and $R^6$ are a methyl group.

Specific examples of the carbonate diester compound include dimethyl carbonate, diethyl carbonate, dipropyl carbonate, dibutyl carbonate, diisopropyl carbonate, diisobutyl carbonate, methyl ethyl carbonate, methyl propyl carbonate, methyl butyl carbonate, ethyl propyl carbonate, ethyl butyl carbonate, ethylene carbonate, propylene carbonate, butylene carbonate, 2,3-butylene carbonate, diphenyl carbonate, and the like.

The carbonate diester compound included in the catalyst composition may be one type or two or more types.

The ratio of the content of the carbonate diester compound to the content of the quaternary ammonium salt (content of carbonate diester compound / content of quaternary ammonium salt) may be 0.05 to 50 in mass ratio. When the above-described ratio is 0.05 or more, the coloration of the coating film tends to be further reduced, and when the above-described ratio is 50 or less, a coating material composition having more excellent low-temperature curability is likely to be obtained. From these viewpoints, the above-described ratio may be 0.1 or more, 0.3 or more, 1 or more, 2 or more, 3 or more, 4 or more, 5 or more, or 10 or more, and may be 40 or less, 30 or less, 20 or less, 10 or less, 6 or less, 5.5 or less, or 5 or less, and may be 0.1 to 40, 0.3 to 30, 1 to 20, 2 to 10, 3 to 6, 3 to 5.5, 3 to 5, 4 to 50, 5 to 50, or 10 to 50. When using a quaternary ammonium salt composed of a combination of a quaternary ammonium cation represented by the above-described formula (1), in which $R^1$ in formula (1) is an alkyl group having 4 to 8 carbon atoms and $R^2$ to $R^4$ are an alkyl group having 1 to 4 carbon atoms, and a monoalkyl carbonate group having an alkyl group of 1 to 8 carbon atoms (for example, a trimethylmono-n-octylammonium cation or a trimethylmono-n-butylammonium cation), if the above-described ratio is 4 or more, the effect of reducing color change over time and coloration of the coating film tends to be further enhanced.

(Other Components)

The catalyst composition may further include components other than the quaternary ammonium salt and the carbonate diester compound. An example of such a component is an alcohol compound. By using an alcohol compound, the effect of suppressing the color change of the quaternary ammonium salt, the effect of reducing the coloration of the coating film, and the effect of improving the low-temperature curability tend to be enhanced. The reason why such effects are obtained is not clear, but it is presumed that the alcohol compound functions as a solvent in the catalyst composition, and the quaternary ammonium salt and the carbonate diester compound are dissolved, whereby the action of the carbonate diester compound on the quaternary ammonium salt is facilitated, and the dissolution of the quaternary ammonium salt and the carbonate diester compound improves the uniformity of the reaction system and enhances the catalytic activity.

The alcohol compound may be a monoalcohol (a compound having one hydroxyl group) or a polyol (a compound having two or more hydroxyl groups). When a monoalcohol is used as the alcohol compound, the effect of improving low-temperature curability and the effect of reducing coloration of the coating film tend to be further enhanced.

The molecular weight of the alcohol compound may be, for example, 18 to 1000, 18 to 700, or 18 to 500. When the molecular weight of the alcohol compound is 500 or less, the effect of improving low-temperature curability and the effect of reducing coloration of the coating film tend to be further enhanced.

The alcohol compound may be an aliphatic alcohol from the viewpoint of further reducing the coloration of the catalyst composition and the coating film. The aliphatic alcohol may be linear or branched. The number of carbon atoms of the aliphatic alcohol may be 1 to 30, and may be 1 to 10, 1 to 6, or 1 to 4.

Specific examples of the alcohol compound include methanol, ethanol, propanol, butanol, pentanol, hexanol, octanol, 2-ethylhexanol, 3,3,5-trimethyl-1-hexanol, n-tridecanol, 2-tridecanol, 2-octyldodecanol, pentadecanol, palmityl alcohol, stearyl alcohol, cyclopentanol, cyclohexanol, methylcyclohexanol, trimethylcyclohexanol, cyclohexanemethanol, heneicosanol, ceryl alcohol, ethylene glycol, 1,2-propanediol, 1,3-butanediol, 1,4-butanediol, 1,5-propanediol, 1,6-hexanediol, 3-methyl-1,5-pentanediol, 1,8-octanediol, 1,9-nonanediol, 1,10-decanediol, neopentyl glycol, 2,2-diethyl-1,3-propanediol, 2-n-butyl-2-ethyl-1,3-propanediol, 2,2,4-trimethyl-1,3-pentanediol, 2-ethyl-1,3-hexanediol, 2-n-hexadecane-1,2-ethylene glycol, 2-n-eicosane-1,2-ethylene glycol, dipropylene glycol, glycerin, trimethylolpropane, pentaerythritol, and the like. Among these, when methanol is used, the effect of improving low-temperature curability and the effect of reducing coloration of the coating film tend to be further enhanced.

The alcohol compound included in the catalyst composition may be one type or two or more types.

The ratio of the content of the alcohol compound to the content of the quaternary ammonium salt (content of

alcohol compound / content of quaternary ammonium salt) may be 0.05 to 50 in mass ratio. When the above-described ratio is 0.05 to 50, a coating material composition having more excellent low-temperature curability is likely to be obtained, and color change over time and coloration of the coating film tend to be further reduced. From the viewpoint that such an effect can be obtained more remarkably, the above-described ratio may be 0.1 or more, 1 or more, 5 or more, or 10 or more, and may be 40 or less, 30 or less, or 20 or less, and may be 0.05 to 40, 0.1 to 50, 1 to 30, 5 to 20, or 10 to 20.

The content of the alcohol compound may be 80 to 98 mass% based on the total mass of the catalyst composition, from the viewpoint of further enhancing the effect of suppressing the color change of the quaternary ammonium salt, the effect of reducing the coloration of the coating film, and the effect of improving the low-temperature curability. From the same viewpoint, the content of the alcohol compound may be 80 mass% or more or 85 mass% or more, and may be 98 mass% or less or 97 mass% or less, and may be 80 to 97 mass% or 85 to 98 mass%, based on the total mass of the catalyst composition.

The catalyst composition may include a deblocking catalyst other than the quaternary ammonium salt. The content of the deblocking catalyst other than the quaternary ammonium salt in the catalyst composition may be 0 to 0.5 mass%, and may be 0.2 mass% or less or 0.1 mass% or less, based on the total mass of the deblocking catalyst.

The catalyst composition can be prepared by mixing the quaternary ammonium salt, the carbonate diester compound, and other optionally included components.

<Blocked Polyisocyanate Composition>

One embodiment of the present disclosure is a blocked polyisocyanate composition including a blocked polyisocyanate, a quaternary ammonium salt, and a carbonate diester compound. The blocked polyisocyanate composition may include the catalyst composition of the above-described embodiment. That is, the blocked polyisocyanate composition may be a composition including a blocked polyisocyanate and the catalyst composition of the above-described embodiment.

Since the above-described blocked polyisocyanate composition includes a quaternary ammonium salt and a carbonate diester compound, it can impart low-temperature curability to a coating material composition. For the same reason, according to the above-described blocked polyisocyanate composition, a coating material composition that is less likely to cause a color change during the production of a coating film (before and after curing of the coating film) can be obtained.

(Blocked Polyisocyanate)

A blocked polyisocyanate is a compound derived from a polyisocyanate that does not have an isocyanate group blocked by a blocking agent (hereinafter, also referred to as "unblocked polyisocyanate"), and has at least a structure derived from an unblocked polyisocyanate and an isocyanate group blocked with a blocking agent (hereinafter, also referred to as a "blocked isocyanate group").

[Unblocked Polyisocyanate]

An unblocked polyisocyanate is a compound having a plurality of isocyanate groups (free isocyanate groups). Examples of the unblocked polyisocyanate include aromatic polyisocyanates, aliphatic polyisocyanates, alicyclic polyisocyanates, and their polyisocyanate derivatives. Examples of the derivatives include isocyanurates, allophanates, biurets, and the like.

The unblocked polyisocyanate may not have an aromatic ring from the viewpoint of improving the yellowing resistance of the cured coating film. That is, the unblocked polyisocyanate may be a non-aromatic polyisocyanate. Examples of the non-aromatic polyisocyanate include aliphatic polyisocyanates such as hexamethylene diisocyanate, tetramethylene diisocyanate, 2-methyl-pentane-1,5-diisocyanate, 3-methyl-pentane-1,5-diisocyanate, lysine triisocyanate, and trioxyethylene diisocyanate; alicyclic polyisocyanates such as isophorone diisocyanate, cyclohexyl diisocyanate, hydrogenated diphenylmethane diisocyanate, norbornane diisocyanate, hydrogenated tolylene diisocyanate, hydrogenated xylene diisocyanate, and hydrogenated tetramethylxylene diisocyanate, and derivatives thereof, and the like. Examples of the derivatives include isocyanurates, allophanates, biurets, and the like. The derivative may be an isocyanate group-containing prepolymer obtained by the reaction of the above-described polyisocyanate and a polyol, or may be a derivative of the prepolymer (for example, an isocyanurate, allophanate, biuret, or the like). As the polyol, for example, a diol having 2 to 9 carbon atoms is used. Examples of such a diol include ethylene glycol, 1,2-propanediol, 1,3-propanediol, 1,2-butanediol, 1,3-butanediol, 1,4-butanediol, and 1,5-pentanediol.

The unblocked polyisocyanate may include an aliphatic polyisocyanate having 4 to 6 carbon atoms or a derivative thereof from the viewpoint of further improving low-temperature curability, and may include hexamethylene diisocyanate or a derivative thereof from the viewpoint of further improving low-temperature curability. In other words, the

blocked polyisocyanate may have a structure derived from an aliphatic polyisocyanate having 4 to 6 carbon atoms or a derivative thereof, and may have a structure derived from hexamethylene diisocyanate or a derivative thereof. The derivative of an aliphatic polyisocyanate having 4 to 6 carbon atoms (for example, hexamethylene diisocyanate) may be at least one selected from the group consisting of an isocyanurate, an allophanate, and a biuret. These derivatives may be derivatives of the above-described isocyanate group-containing prepolymer. Among these, when the derivative of hexamethylene diisocyanate is an isocyanurate, a higher coating film hardness tends to be obtained. When the unblocked polyisocyanate includes an isocyanurate, from the viewpoint of further improving the coating film hardness, the content of isocyanurate trimer (content of isocyanurate trimer) based on the total mass of the unblocked polyisocyanate may be 50 mass% or more, and the content rate of isocyanurate group (content rate of isocyanurate group) with respect to the total (100 mol%) of isocyanurate groups and allophanate groups in the unblocked polyisocyanate may be more than 80 mol%. The upper limit of the content of above-described isocyanurate trimer may be 80 mass%, and the upper limit of the content rate of above-described isocyanurate group may be 99 mol%.

[Blocked Isocyanate Group]

A blocked isocyanate group is an isocyanate group blocked with a blocking agent, and has a structure derived from the blocking agent.

Examples of the blocking agent include alcohol-based blocking agents such as methanol, ethanol, n-butanol, isobutanol, 2-ethylhexanol, butyl cellosolve, propylene glycol monomethyl ether, ethylene glycol, and benzyl alcohol; phenol-based blocking agents such as phenol, cresol, ethylphenol, butylphenol, and 2-hydroxypyridine; lactam-based blocking agents such as ε-caprolactam, δ-valerolactam, and γ-butyrolactam; oxime-based blocking agents such as formaldoxime, acetaldoxime, acetone oxime, methyl ethyl ketoxime, methyl isobutyl ketoxime, and cyclohexanone oxime; imidazole-based blocking agents such as imidazole, 2-methylimidazole, 4-methylimidazole, 2,4-dimethylimidazole, 2-ethylimidazole, 2-propylimidazole, 2-isopropylimidazole, 4-methyl-2-propylimidazole, 2-phenylimidazole, 4-phenylimidazole, 5-phenylimidazole, 2-methyl-4-phenylimidazole, 2-ethyl-4-methylimidazole, 2-undecylimidazole, and 2-heptadecylimidazole; pyrazole-based blocking agents such as 3,5-dimethylpyrazole, 3-methylpyrazole, and pyrazole; amine-based blocking agents such as diphenylamine, diisopropylamine, and isopropylethylamine; and triazole-based blocking agents such as triazole, 1,2,4-triazole, and 3,5-dimethyl-1,2,4-triazole, and the like. From the viewpoint of storage stability, an oxime-based blocking agent may be used. As the oxime-based blocking agent, methyl ethyl ketoxime is preferable. From the viewpoint of curability, a pyrazole-based blocking agent may be used. As the pyrazole-based blocking agent, 3,5-dimethylpyrazole is preferable.

From the above-described viewpoint, in one embodiment, the blocked polyisocyanate may have at least one group selected from the group consisting of an isocyanate group blocked with an oxime-based blocking agent and an isocyanate group blocked with a pyrazole-based blocking agent.

The blocked polyisocyanate may have a free isocyanate group, but when the blocked polyisocyanate does not have a free isocyanate group, storage stability can be further improved. From the viewpoint of further enhancing storage stability, all of the effective isocyanate groups in the blocked polyisocyanate may be blocked isocyanate groups. Here, the effective isocyanate group means both a free isocyanate group and a blocked isocyanate group.

The blocked polyisocyanate can be obtained, for example, by reacting a polyisocyanate having a free isocyanate group, such as the above-described unblocked polyisocyanate, with the above-described blocking agent. That is, the blocked polyisocyanate can be a reaction product of a polyisocyanate having a free isocyanate group and the above-described blocking agent. The polyisocyanate having a free isocyanate group and the blocking agent may each be used alone as one type, or two or more types may be used in combination. However, when an aromatic polyisocyanate is not used as the polyisocyanate having a free isocyanate group, the yellowing resistance of the cured coating film can be further improved.

The blocked polyisocyanate may be a compound derived from a reaction product of a polyisocyanate having a free isocyanate group and a blocking agent. The blocked polyisocyanate may be, for example, a compound obtained by reacting a reaction product of a polyisocyanate having a free isocyanate group and a blocking agent with a compound that can react with the free isocyanate group in the reaction product (for example, an active hydrogen group-containing compound or the like).

The reaction between the polyisocyanate having a free isocyanate group and the blocking agent can be carried out in accordance with the reaction conditions of a normal blocking reaction. The reaction may be carried out at room temperature, or may be carried out while heating. Regardless of the presence or absence of heating, the temperature of the reaction solution may be, for example, 20 to 200°C.

The blocked polyisocyanate may be used alone as one type, or two or more types may be used in combination. For example, two or more types of blocked polyisocyanates derived from different types of unblocked polyisocyanates may be used in combination.

The content of the blocked polyisocyanate may be 40 mass% or more, and may be 60 mass% or more or 80

mass% or more, based on the total solid content of the blocked polyisocyanate composition, from the viewpoint of making it easier to obtain a coating material composition having more excellent low-temperature curability. The content of the blocked polyisocyanate may be less than 100 mass%, and may be 95 mass% or less or 90 mass% or less, based on the total solid content of the blocked polyisocyanate composition, from the viewpoint of improving the storage stability of the coating material. From these viewpoints, the content of the blocked polyisocyanate may be, for example, 40 mass% or more and less than 100 mass%, and may be 60 to 95 mass% or 80 to 90 mass%, based on the total solid content of the blocked polyisocyanate composition. The total solid content of the blocked polyisocyanate composition means the amount obtained by excluding the amount of solvent from the total amount of the blocked polyisocyanate composition when the blocked polyisocyanate composition includes a solvent, and means the total amount of the blocked polyisocyanate composition when the blocked polyisocyanate composition does not include a solvent.

(Quaternary Ammonium Salt and Carbonate Diester Compound) The details of the quaternary ammonium salt and the carbonate diester compound are the same as the details of the quaternary ammonium salt and the carbonate diester compound included in the catalyst composition. In addition, the ratio of the content of the carbonate diester compound to the content of the quaternary ammonium salt can be in the same range as the range exemplified as the ratio of the content of the carbonate diester compound to the content of the quaternary ammonium salt in the catalyst composition.

The content of the quaternary ammonium salt may be 0.0001 parts by mass or more, and may be 0.001 parts by mass or more, 0.01 parts by mass or more, 0.1 parts by mass or more, or 1 part by mass or more, with respect to 100 parts by mass of the blocked polyisocyanate, from the viewpoint of making it easier to obtain a coating material composition having more excellent low-temperature curability. The content of the quaternary ammonium salt may be 40 parts by mass or less, and may be 30 parts by mass or less, 20 parts by mass or less, 10 parts by mass or less, or 5 parts by mass or less, with respect to 100 parts by mass of the blocked polyisocyanate, from the viewpoint of improving the storage stability of the coating material. From these viewpoints, the content of the quaternary ammonium salt may be, for example, 0.0001 to 40 parts by mass, 0.001 to 30 parts by mass, 0.01 to 20 parts by mass, 0.1 to 10 parts by mass, or 1 to 5 parts by mass, with respect to 100 parts by mass of the blocked polyisocyanate. When the blocked polyisocyanate composition includes a catalyst composition, the content of the catalyst composition may be adjusted so that the content of the quaternary ammonium salt falls within the above-described range.

(Other Components)

The blocked polyisocyanate composition may further contain, as other components, components other than the blocked polyisocyanate, the quaternary ammonium salt, and the carbonate diester compound. Examples of other components include additives such as pigments, dispersion stabilizers, viscosity modifiers, leveling agents, anti-gelling agents, light stabilizers, antioxidants, ultraviolet absorbers, heat resistance improvers, inorganic and organic fillers, plasticizers, lubricants, antistatic agents, reinforcing materials, and catalysts.

The blocked polyisocyanate composition may contain an alcohol compound as another component. The details of the alcohol compound are the same as those of the above-described embodiment.

The blocked polyisocyanate composition may contain a solvent as another component. Examples of the solvent include benzene, toluene, xylene, cyclohexane, acetone, methyl ethyl ketone, methyl isobutyl ketone, ethyl acetate, n-butyl acetate, cellosolve acetate, propylene glycol monomethyl ether acetate, diethylene glycol dimethyl ether, 1,4-dioxane, and the like. These solvents may be used alone, or two or more types may be used in combination. The content of the solvent may be 0 to 95 mass%, and may be 5 to 90 mass% or 10 to 80 mass%, based on the total mass of the blocked polyisocyanate composition.

The blocked polyisocyanate composition may include an unblocked polyisocyanate (for example, a polyisocyanate remaining as an unreacted substance), and may include an unreacted blocking agent. The content of the unblocked polyisocyanate included in the blocked polyisocyanate composition may be 5 mass% or less, and may be 0 mass%, based on the total solid content of the blocked polyisocyanate composition. The content of the unreacted blocking agent included in the blocked polyisocyanate composition may be 5 mass% or less, and may be 0 mass%, based on the total solid content of the blocked polyisocyanate composition.

The effective isocyanate group content rate (hereinafter, referred to as "effective NCO content rate") of the blocked polyisocyanate composition may be 4 to 28 mass%, and may be 5 to 22 mass% or 6 to 16 mass%, from the viewpoint of further enhancing the curability of the coating material. Here, the effective NCO content rate is a value representing the isocyanate groups that can participate in the crosslinking reaction present in the blocked polyisocyanate composition in mass%, and can be rephrased as the content rate (free NCO content rate) of free isocyanate groups in the polyisocyanate composition obtained by dissociating the blocking agent from the blocked polyisocyanate, with respect to the total mass of the blocked polyisocyanate composition. The free NCO content rate can be determined by reacting the isocyanate groups in a measurement sample (a polyisocyanate composition obtained by dissociating a blocking agent from a blocked polyisocyanate) with an excess of a secondary amine, and then back-titrating the unreacted secondary amine with hydrochloric acid.

The blocked polyisocyanate composition described above can be prepared by mixing the above-described blocked polyisocyanate, the above-described pre-prepared catalyst composition, and other optionally included components. The blocked polyisocyanate composition can also be prepared by mixing the blocked polyisocyanate, the quaternary ammonium salt, the carbonate diester compound, and other optionally included components. The blocked polyisocyanate composition is used, for example, as a curing agent for a coating material composition (for example, a low-temperature curing type coating material composition). That is, another embodiment of the present disclosure is a curing agent for a coating material (for example, a low-temperature curing type coating material), composed of the above-described blocked polyisocyanate composition.

<Coating Material Composition>

Another embodiment of the present disclosure is a coating material composition including a main agent and a curing agent, which includes a blocked polyisocyanate and the catalyst composition of the above-described embodiment. The coating material composition may include the above-described blocked polyisocyanate composition. The details of the blocked polyisocyanate included in the coating material composition are the same as the details of the blocked polyisocyanate included in the above-described blocked polyisocyanate composition.

The above-described coating material composition may be a one-component composition in which all of the constituent components are included in a single component, or may be a multi-component composition in which the constituent components are present separately in a plurality of components. The multi-component coating material composition may include a first liquid including a main agent and a second liquid including a curing agent. The blocked polyisocyanate is included in the above-described second liquid as a curing agent, but the catalyst composition may be included in either the first liquid or the second liquid. Similarly, when the coating material composition includes other components that can be included in the above-described blocked polyisocyanate composition, these components may be included in either the first liquid or the second liquid. When the catalyst composition is included in the second liquid, the blocked polyisocyanate composition of the above-described embodiment may be used as the second liquid.

Since the above-described coating material composition includes a blocked polyisocyanate and the catalyst composition of the above-described embodiment, it has excellent low-temperature curability. For the same reason, according to the above-described coating material composition, a color change is less likely to occur during the production of a coating film (before and after curing of the coating film), and a coating film with little coloration can be easily formed.

The main agent includes, for example, an active hydrogen group-containing compound. Examples of the active hydrogen group include a hydroxy group, an amino group, and the like. The average number of functional groups (average number of active hydrogen groups) of the active hydrogen group-containing compound is 2 or more, for example, 2 to 50. Examples of the active hydrogen-containing compound having such an average number of functional groups include a polyol, a polyamine, an amino alcohol, and the like. Among these, when the main agent includes a polyol as the active hydrogen group-containing compound, more excellent low-temperature curability is likely to be obtained, and a coating film with less coloration is likely to be obtained.

The number average molecular weight of the active hydrogen group-containing compound is, for example, 500 to 20,000, and may be 500 to 10,000. Examples of the active hydrogen group-containing compound having such a number average molecular weight include polyurethane resins, polyamide resins, saturated or unsaturated polyester resins, alkyd resins modified with saturated or unsaturated fatty acids, acrylic resins, fluororesins, epoxy resins, cellulose resins, and the like (provided that all are resins having an active hydrogen group). From the viewpoints of coating film performance such as gloss, fullness, hardness, durability, flexibility, and drying properties, and cost, at least one compound selected from the group consisting of saturated or unsaturated polyester resins, alkyd resins modified with saturated or unsaturated fatty acids, and acrylic resins may be used.

The mixing ratio of the main agent and the curing agent in the coating material composition may be adjusted based on the ratio of the total amount of effective isocyanate groups in the curing agent to the total amount of active hydrogen groups in the main agent. The ratio of the total amount of effective isocyanate groups in the curing agent to the total amount of active hydrogen groups in the main agent may be 1/9 to 9/1, and may be 2/8 to 8/2, in molar ratio. When the above-described molar ratio is within the above-described range, better curability is obtained.

The content of the catalyst composition in the coating material composition may be adjusted, similarly to the content of the catalyst composition in the above-described blocked polyisocyanate composition, so that the content of the quaternary ammonium salt with respect to 100 parts by mass of the blocked polyisocyanate is within the above-described range (for example, 0.0001 to 40 parts by mass).

The coating material composition can be used as a top and intermediate coating for automobiles, an anti-chipping coating, an electrodeposition coating, a coating for automobile parts, a coating for automobile repair, a pre-coated metal for home appliances, office equipment, and the like, an anti-corrosion steel sheet, a coating for building materials, a coating for plastics, an adhesive, an adhesion-imparting agent, a sealing agent, and the like.

<Coating Film and Method for Forming Coating Film> Another embodiment of the present disclosure is a coating

film formed from the coating material composition of the above-described embodiment. In addition, another embodiment of the present disclosure is a method for forming a coating film, including a step of applying the coating material composition of the above-described embodiment to an object to be coated and curing a coating film composed of the coating material composition (an uncured coating film).

The coating film may be an uncured coating film composed of a mixture of the main agent and the curing agent in the coating material composition of the above-described embodiment, or may be a coating film (cured coating film) formed by curing the uncured coating film. The thickness of the coating film is, for example, 5 to 40 μm. The coating film may be a thin film with a thickness of less than 20 μm.

The application of the coating material composition may be performed by a known method such as roll coating, curtain flow coating, spray coating, electrostatic coating, bell coating, or electrodeposition coating. The application amount of the coating material composition, the thickness of the coating film, and the like may be appropriately determined according to the material of the surface to be coated.

The curing of the coating film composed of the coating material composition (uncured coating film) may be performed by heating the coating film. The heating temperature (baking temperature) may be, for example, 200°C or lower, and the heating time (baking time) may be, for example, 10 to 180 minutes. According to the coating material composition of the present embodiment, a cured coating film having good hardness can be formed even when baking is performed at a low temperature of 100°C or lower (for example, 60 to 100°C).

Examples of the object to be coated include molded bodies formed from materials such as stainless steel, phosphated steel, galvanized steel, iron, copper, aluminum, brass, glass, acrylic polyol, polycarbonate resin, polyethylene terephthalate resin, polyethylene naphthalate resin, polybutylene phthalate resin, polystyrene resin, AS resin, ABS resin, polycarbonate-ABS resin, 6-nylon resin, 6,6-nylon resin, MXD6 nylon resin, polyvinyl chloride resin, polyvinyl alcohol resin, polyurethane resin, phenol resin, melamine resin, polyacetal resin, chlorinated polyolefin resin, polyolefin resin, polyamide resin, polyetheretherketone resin, polyphenylene sulfide resin, NBR resin, chloroprene resin, SBR resin, and SEBS resin, and surface-treated products of the molded bodies, and the like. The surface-treated product may be a molded body of an olefin resin such as polyethylene or polypropylene that has been subjected to a surface treatment such as a corona discharge treatment (surface-treated molded body).

[Examples]

Hereinafter, the content of the present invention will be described in more detail using Examples and Comparative Examples, but the present invention is not limited to the following Examples.

<Synthesis Example 1>

(Synthesis of Quaternary Ammonium Salt)

Into a 200 ml autoclave, 15.4 g of dimethylmono-n-octylamine (manufactured by Tokyo Chemical Industry Co., Ltd.), 13.2 g of dimethyl carbonate (manufactured by Tokyo Chemical Industry Co., Ltd.), and 31.4 g of methanol (manufactured by Kishida Chemical Co., Ltd.) were charged, and reacted by stirring at 110°C for 12 hours. The reaction solution was collected in a container (a single-neck roundbottom flask), and the inside of the container was depressurized to 30°C to remove unreacted dimethyl carbonate and methanol, thereby obtaining 24.2 g of trimethylmono-n-octylammonium monomethyl carbonate (hereinafter, referred to as "TMOA-MC").

<Synthesis Example 2>

(Synthesis of Polyisocyanate)

Into a four-necked flask equipped with a stirrer, a thermometer, a heating device, a nitrogen seal tube, and a cooling tube, 995 g of hexamethylene diisocyanate (hereinafter, referred to as HDI), 5.0 g of 1,3-butanediol (manufactured by Tokyo Chemical Industry Co., Ltd.), and 0.3 g of phenol (manufactured by Tokyo Chemical Industry Co., Ltd.) were charged, and a urethanization reaction was carried out at 80°C for 2 hours under a nitrogen stream. Thereafter, 0.04 g of potassium 2-ethylhexanoate (manufactured by Tokyo Chemical Industry Co., Ltd.), which is an isocyanuration reaction catalyst, was added, and an isocyanuration reaction was carried out at 70°C for 2 hours. After the NCO content reached 40.0 mass%, 0.15 g of JP-508 (manufactured by Johoku Chemical Co., Ltd.) was added to perform a termination reaction, and the reaction solution was cooled to room temperature. Unreacted HDI was removed from this reaction solution by thin-film distillation at a temperature of 130°C and a pressure of 0.04 kPa to obtain a purified polyisocyanate (hereinafter referred to as "Polyisocyanate A-1"). The NCO content of Polyisocyanate A-1 was 21.8 mass%, and the viscosity at 25°C was about 2,500 mPa·s.

($^1$H-NMR: Measurement of Content Rate of Isocyanurate Group) $^1$H-NMR measurement of Polyisocyanate A-1 was performed to determine the content rate of isocyanurate group (the content rate of isocyanurate group with respect to the total (100 mol%) of isocyanurate groups and allophanate groups). Specifically, the content rate of isocyanurate group was calculated from the area of the signal of the hydrogen atom of the methylene group adjacent to the nitrogen atom of the isocyanurate group around 3.7 ppm and the signal of the hydrogen atom bonded to the nitrogen atom of the allophanate group around 8.5 ppm. The content rate of isocyanurate group was 89 mol%. The $^1$H-NMR measurement was performed under the following measurement conditions.

[Measurement Conditions]

(1) Measurement device: ECX400M (manufactured by JEOL Ltd., $^1$H-NMR)
(2) Measurement temperature: 23°C
(3) Sample concentration: 0.1 g/1 ml
(4) Number of scans: 16
(5) Relaxation time: 5 seconds
(6) Solvent: Deuterated dimethyl sulfoxide
(7) Chemical shift reference: Hydrogen atom signal of the methyl group in deuterated dimethyl sulfoxide (2.5 ppm)

<Examples 1 to 8 and Comparative Example 1>

(Preparation of Catalyst Composition)

By mixing dimethyl carbonate (manufactured by Tokyo Chemical Industry Co., Ltd., "DMC" in the table), which is a carbonate diester compound, and TMOA-MC, which is a quaternary ammonium salt, at the mass ratio [a/b] (quaternary ammonium salt / carbonate diester compound) shown in Table 1 below, the catalyst compositions of Examples 1 to 8 (Catalyst Compositions 1 to 8) were prepared. In Comparative Example 1, no carbonate diester compound was used, and TMOA-MC was used as it was as the catalyst.

(Discoloration Resistance Evaluation)

Catalyst Compositions 1 to 8 were stored at 80°C for 48 hours, and the b* value in the CIE Lab standard of the catalyst composition was measured before and after storage using a spectrophotometer COH7700 manufactured by Nippon Denshoku Industries Co., Ltd. The "rate of change of b* value" was determined from the b* values before and after storage (initial b* value and post-storage b* value) by the following formula, and the resistance to discoloration over time (discoloration resistance) of the catalyst composition was evaluated based on this rate of change. Similarly, the discoloration resistance of the catalyst of Comparative Example 1 (TMOA-MC) was also evaluated.

Rate of change of b* value (unit: %) = 100 × (post-storage b* value - initial b* value) / initial b* value

The evaluation criteria are shown below, and the results are shown in Table 1. If the evaluation was B, the catalyst composition was evaluated as having sufficient discoloration resistance.

A: Rate of change of b* value is 0% or more and less than 30%
B: Rate of change of b* value is 30% or more and less than 60%
C: Rate of change of b* value is 60% or more

(Preparation of Blocked Polyisocyanate Composition)

Using Catalyst Compositions 1 to 8 and the catalyst of Comparative Example 1, respectively, the blocked polyisocyanate compositions of Examples 1 to 8 and Comparative Example 1 (Blocked Polyisocyanate Compositions 1 to 9) were prepared by the following method.

Into a four-necked flask equipped with a stirrer, a thermometer, a heating device, a nitrogen seal tube, and a cooling tube, 515 g of Polyisocyanate A-1 and 250 g of butyl acetate were charged and stirred for 30 minutes. Then, 234 g of methyl ethyl ketoxime (manufactured by Ube Industries, Ltd., "MEKO" in the table) (equivalent ratio of 1.0 with respect to the mixed amount of Polyisocyanate A-1) was charged in three portions so that the temperature did not exceed 80°C.

Thereafter, the mixture was reacted at 70°C for 2 hours, and after the peak of the NCO group (around 2270 $cm^{-1}$) disappeared in the infrared absorption spectrum (IR measurement), the mixture was cooled to room temperature, and Catalyst Compositions 1 to 8 or the catalyst of Comparative Example 1 was added so that the added amount of the quaternary ammonium salt was 22.5 g, and stirred for 30 minutes. By the above operations, Blocked Polyisocyanate Compositions 1 to 9 were obtained, respectively.

(Preparation of Coating Material Composition)

Using Blocked Polyisocyanate Compositions 1 to 9, respectively, the coating material compositions of Examples 1 to 8 and Comparative Example 1 (Coating Material Compositions 1 to 9) were prepared. Specifically, a coating material composition was prepared by mixing Acrydic A-801 (manufactured by DIC Corporation, acrylic polyol, solid content concentration 50 mass%, hydroxyl value 50 mgKOH/g, trade name, "A801" in the table), which is a main agent, a blocked polyisocyanate composition ("BPI" in the table), which is a curing agent, and butyl acetate (manufactured by Kishida Chemical Co., Ltd., "BtAc" in the table). The amounts of each component were as described in Table 1.

(Production and Coloration Evaluation of Coating Film)

Coating Material Compositions 1 to 9 were applied to an object to be coated under the following conditions and cured to obtain the coating films (cured coating films) of Examples 1 to 8 and Comparative Example 1, respectively. At this time, the b* value in the CIE Lab standard of the cured coating film was measured using a colorimeter (product name: SPECTRO2GUIDE) manufactured by BYK-GARDNER. The results are shown in Table 1. As the object to be coated, a color steel sheet (white) (manufactured by Yutaka Panel Service Co., Ltd., 0.8 mm thick) was used.

[Conditions]

- Coating method: Using an applicator
- Humidity condition: 50% RH
- Temperature condition: 23°C
- Drying (curing) condition: Forced drying at 160°C for 1 hour
- Film thickness: about 20 μm

(Evaluation of Low-Temperature Curability: Measurement of Coating Film Hardness)

Coating Material Compositions 1 to 9 were applied to an object to be coated under the following conditions and cured to obtain the coating films (cured coating films) of Examples 1 to 8 and Comparative Example 1, respectively. As the object to be coated, a color steel sheet (white) (manufactured by Yutaka Panel Service Co., Ltd., 0.8 mm thick) was used.

[Conditions]

- Coating method: Using an applicator
- Humidity condition: 50% RH
- Temperature condition: 23°C
- Drying (curing) condition: Forced drying at 80°C for 20 minutes
- Film thickness: about 20 μm

The hardness of the coating film (cured coating film) obtained above was measured under the following conditions in accordance with ISO 14577. The results are shown in Table 1.

[Conditions]

- Test apparatus: Fischer Scope HM2000 (manufactured by Fischer Instruments K.K.)
- Indenter: Vickers diamond

- Test load: 5 mN
- Test temperature: 25°C

<Example 9>

(Preparation of Blocked Polyisocyanate Composition)

Into a four-necked flask equipped with a stirrer, a thermometer, a heating device, a nitrogen seal tube, and a cooling tube, 500 g of Polyisocyanate A-1 and 250 g of butyl acetate were charged and stirred for 30 minutes. Then, 249 g of 3,5-dimethylpyrazole (manufactured by Tokyo Chemical Industry Co., Ltd., "DMP" in the table) (equivalent ratio of 1.0 with respect to the mixed amount of Polyisocyanate A-1) was charged in three portions so that the temperature did not exceed 80°C. Thereafter, the mixture was reacted at 70°C for 2 hours, and after the peak of the NCO group (around 2270 $cm^{-1}$) disappeared in the infrared absorption spectrum (IR measurement), the mixture was cooled to room temperature, and 22.5 g of the catalyst composition of Example 4 (Catalyst Composition 4) was added so that the added amount of the quaternary ammonium salt was 22.5 g, and stirred for 30 minutes. By the above operations, Blocked Polyisocyanate Composition 10 was obtained.

(Preparation, Production, and Evaluation of Coating Material Composition and Coating Film)

Coating Material Composition 10 was prepared in the same manner as in Example 1, except that Blocked Polyisocyanate Composition 10 was used instead of Blocked Polyisocyanate Composition 1, and the amounts of each component were as described in Table 1. In addition, a coating film (cured coating film) was produced in the same manner as in Example 1, except that Coating Material Composition 10 was used instead of Coating Material Composition 1, and the coloration evaluation (measurement of b*) and measurement of coating film hardness were performed. The results are shown in Table 1.

<Example 10>

Catalyst Composition 11 was prepared in the same manner as in Example 2, except that a 10 mass% methanol solution of tetramethylammonium hydroxide (hereinafter, referred to as "TMA-OH") (manufactured by Tokyo Chemical Industry Co., Ltd.) was used instead of TMOA-MC, and the mixing mass ratio of each component "quaternary ammonium salt (TMA-OH) / carbonate diester compound (DMC) / alcohol compound (methanol)" (mass ratio [a/b/c] in the table) was set to 1/0.5/9, and the discoloration resistance of Catalyst Composition 11 was evaluated. The results are shown in Table 2.

Blocked Polyisocyanate Composition 11 was prepared in the same manner as in Example 1, except that Catalyst Composition 11 was used instead of Catalyst Composition 1, and Coating Material Composition 11 was prepared in the same manner as in Example 1, except that Blocked Polyisocyanate Composition 11 was used instead of Blocked Polyisocyanate Composition 1, and the amounts of each component were as described in Table 2. In addition, a coating film was produced in the same manner as in Example 1, except that Coating Material Composition 11 was used instead of Coating Material Composition 1, and the coloration evaluation and hardness measurement of the coating film were performed. The results are shown in Table 2.

<Examples 11 to 12>

Catalyst Compositions 12 to 13 were prepared in the same manner as in Example 10, except that diethyl carbonate (manufactured by Tokyo Chemical Industry Co., Ltd., "DEC" in the table) or diethyl carbonate (manufactured by Tokyo Chemical Industry Co., Ltd., "EC" in the table) was used instead of dimethyl carbonate, and the discoloration resistance of Catalyst Compositions 12 to 13 was evaluated. The results are shown in Table 2.

Blocked Polyisocyanate Compositions 12 to 13 were prepared in the same manner as in Example 1, except that Catalyst Compositions 12 to 13 were used instead of Catalyst Composition 1, and Coating Material Compositions 12 to 13 were prepared in the same manner as in Example 1, except that Blocked Polyisocyanate Compositions 12 to 13 were used instead of Blocked Polyisocyanate Composition 1, and the amounts of each component were as described in Table 2. In addition, a coating film was produced in the same manner as in Example 1, except that Coating Material Compositions 12 to 13 were used instead of Coating Material Composition 1, and the coloration evaluation and hardness measurement of the coating film were performed. The results are shown in Table 2.

<Example 13>

Catalyst Composition 14 was prepared in the same manner as in Example 1, except that methanol (manufactured by Tokyo Chemical Industry Co., Ltd.) was mixed in addition to TMOA-MC and DMC, and the mixing mass ratio of each component "quaternary ammonium salt (TMA-OH) / carbonate diester compound (DMC) / alcohol compound (methanol)" (mass ratio [a/b/c] in the table) was set to 1/0.5/9, and the discoloration resistance of Catalyst Composition 14 was evaluated. The results are shown in Table 2.

Blocked Polyisocyanate Composition 14 was prepared in the same manner as in Example 1, except that Catalyst Composition 14 was used instead of Catalyst Composition 1, and Coating Material Composition 14 was prepared in the same manner as in Example 1, except that Blocked Polyisocyanate Composition 14 was used instead of Blocked Polyisocyanate Composition 1, and the amounts of each component were as described in Table 2. In addition, a coating film was produced in the same manner as in Example 1, except that Coating Material Composition 14 was used instead of Coating Material Composition 1, and the coloration evaluation and hardness measurement of the coating film were performed. The results are shown in Table 2.

<Example 14>

Catalyst Composition 15 was prepared in the same manner as in Example 13, except that the mixing mass ratio of each component in the catalyst composition "quaternary ammonium salt (TMA-OH) / carbonate diester compound (DMC) / alcohol compound (methanol)" (mass ratio [a/b/c] in the table) was set to 1/0.5/18, and the discoloration resistance of Catalyst Composition 15 was evaluated. The results are shown in Table 2.

Blocked Polyisocyanate Composition 15 was prepared in the same manner as in Example 1, except that Catalyst Composition 15 was used instead of Catalyst Composition 1, and Coating Material Composition 15 was prepared in the same manner as in Example 1, except that Blocked Polyisocyanate Composition 15 was used instead of Blocked Polyisocyanate Composition 1, and the amounts of each component were as described in Table 2. In addition, a coating film was produced in the same manner as in Example 1, except that Coating Material Composition 15 was used instead of Coating Material Composition 1, and the coloration evaluation and hardness measurement of the coating film were performed. The results are shown in Table 2.

<Comparative Example 2>

Blocked Polyisocyanate Composition 16 was prepared in the same manner as in Comparative Example 1, except that TMA-OH was used as it was as the catalyst, and Coating Material Composition 16 was prepared in the same manner as in Example 1, except that Blocked Polyisocyanate Composition 16 was used instead of Blocked Polyisocyanate Composition 1, and the amounts of each component were as described in Table 2. In addition, a coating film was produced in the same manner as in Example 1, except that Coating Material Composition 16 was used instead of Coating Material Composition 1, and the coating film hardness was measured. The results are shown in Table 2.

[Table 1]

| | | | Example 1 | Example 2 | Example 3 | Example 4 | Example 5 | Example 6 | Example 7 | Example 8 | Example 9 | Comparative Example 1 |
|---|---|---|---|---|---|---|---|---|---|---|---|---|
| Catalyst composition | a) Quaternary ammonium salt | | TMOA-MC | | | | | | | | | |
| | b) Carbonate diester compound | | DMC | | | | | | | | | - |
| | Mass ratio [a/b] | | 1 / 0.1 | 1 / 0.5 | 1 / 1.4 | 1 / 4.1 | 1 / 9.6 | 1 / 20 | 1 / 30 | 1 / 40 | 1 / 4.1 | - |
| | Discoloration resistance | b* value Change rate [%] | 55 | 50 | 40 | 5 | 0 | 0 | 0 | 0 | 5 | 65 |
| | | Evaluation | B | B | B | A | A | A | A | A | A | C |
| Type of blocking agent | | | MEKO | | | | | | | | DMP | MEKO |
| Coating material composition | Amount blended [parts by mass] | A-801 | 53 | 53 | 53 | 53 | 53 | 53 | 53 | 53 | 53 | 53 |
| | | BPI | 18 | 18 | 19 | 20 | 22 | 26 | 31 | 38 | 20 | 18 |
| | | BtAc | 29 | 29 | 28 | 27 | 25 | 21 | 16 | 9 | 27 | 29 |
| Coating film | b* value | | 5.4 | 5.1 | 4.9 | 4.4 | 4.3 | 4.2 | 4.1 | 4.0 | 3.0 | 6.3 |
| | Hardness | | 80 | 80 | 80 | 80 | 75 | 70 | 65 | 60 | 80 | 80 |

[Table 2]

| | | | Example 10 | Example 11 | Example 12 | Example 13 | Example 14 | Comparative Example 2 |
|---|---|---|---|---|---|---|---|---|
| Catalyst composition | a) Quaternary ammonium salt | | TMA-OH | | | TMOA-MC | | TMA-OH |
| | b) Carbonate diester compound | | DMC | DEC | EC | DMC | | - |
| | c) Alcohol compound | | Methanol | | | | | |
| | Mass ratio [a/b/c] | | 1 / 0.5 / 9 | 1 / 0.5 / 9 | 1 / 0.5 / 9 | 1 / 0.5 / 9 | 1 / 0.5 / 18 | 1 / 0 / 9 |
| | Discoloration resistance | b* value Change rate [%] | 20 | 30 | 50 | 15 | 10 | 90 |
| | | Evaluation | A | B | B | A | A | C |
| Type of blocking agent | | | MEKO | | | | | |
| Coating material composition | Amount blended [parts by mass] | A-801 | 53 | 53 | 53 | 53 | 53 | 53 |
| | | BPI | 22 | 22 | 22 | 22 | 26 | 22 |
| | | BtAc | 25 | 25 | 25 | 25 | 21 | 25 |
| Coating film | b* value | | 4.0 | 5.0 | 5.2 | 3.8 | 3.5 | - |
| | Hardness | | 70 | 70 | 80 | 80 | 80 | 50 |

**Claims**

1. A catalyst composition used for dissociating a blocking agent from a blocked polyisocyanate, comprising a quaternary ammonium salt and a carbonate diester compound.

2. The catalyst composition according to claim 1, wherein a ratio of a content of the carbonate diester compound to a content of the quaternary ammonium salt is 0.05 to 50 in mass ratio.

3. The catalyst composition according to claim 1, wherein the quaternary ammonium salt comprises a quaternary ammonium cation represented by the following formula (1).

[Chem. 1]

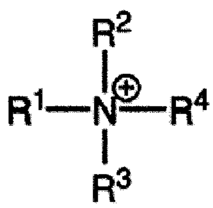

(1)

[In formula (1), $R^1$ represents an alkyl group having 1 to 16 carbon atoms which may have a hydroxy group, an amino group, or an alkoxy group as a substituent, and $R^2$ to $R^4$ each independently represent an alkyl group having 1 to 8 carbon atoms.]

4. The catalyst composition according to claim 1, wherein the carbonate diester compound comprises a compound represented by the following formula (2).

[Chem. 2]

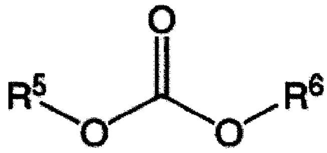

(2)

[In formula (2), $R^5$ and $R^6$ each independently represent an aliphatic saturated hydrocarbon group having 1 to 16 carbon atoms, and $R^5$ and $R^6$ may be linked to each other to form a ring.]

**5.** The catalyst composition according to claim 1, further comprising an alcohol compound.

**6.** A blocked polyisocyanate composition comprising a blocked polyisocyanate and the catalyst composition according to any one of claims 1 to 5.

**7.** The blocked polyisocyanate composition according to claim 6, wherein a content of the quaternary ammonium salt is 0.0001 to 40 parts by mass with respect to 100 parts by mass of the blocked polyisocyanate.

**8.** The blocked polyisocyanate composition according to claim 6, wherein the blocked polyisocyanate comprises a structure derived from an aliphatic polyisocyanate having 4 to 6 carbon atoms or a derivative thereof.

**9.** The blocked polyisocyanate composition according to claim 6, wherein the blocked polyisocyanate has at least one group selected from the group consisting of an isocyanate group blocked with an oxime-based blocking agent and an isocyanate group blocked with a pyrazole-based blocking agent.

**10.** A coating material composition comprising a main agent and a curing agent, wherein the curing agent comprises a blocked polyisocyanate, and the main agent or the curing agent comprises the catalyst composition according to any one of claims 1 to 5.

**11.** A coating film formed from the coating material composition according to claim 10.

**12.** A method for forming a coating film, comprising a step of applying the coating material composition according to claim 10 to an object to be coated and curing a coating film composed of the coating material composition by heating at 60 to 100°C.

## INTERNATIONAL SEARCH REPORT

International application No.
**PCT/JP2024/022287**

**A. CLASSIFICATION OF SUBJECT MATTER**

***C08G 18/80***(2006.01)i; ***B01J 31/02***(2006.01)i; ***C08G 18/18***(2006.01)i; ***C09D 175/04***(2006.01)i
FI: C08G18/80; C08G18/18; C09D175/04; B01J31/02 102M

According to International Patent Classification (IPC) or to both national classification and IPC

**B. FIELDS SEARCHED**

Minimum documentation searched (classification system followed by classification symbols)

C08G18/00-18/87; C08G71/00-71/04; C09D1/00-10/00; C09D101/00-201/10; B01J31/02

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2013-091767 A (TOSOH CORP.) 16 May 2013 (2013-05-16) claims 1-4, examples | 1-12 |
| A | JP 2014-118531 A (TOSOH CORP.) 30 June 2014 (2014-06-30) claims 1-4, examples | 1-12 |
| A | WO 2023/008572 A1 (KOEI CHEMICAL COMPANY.) 02 February 2023 (2023-02-02) claims 1-21, examples | 1-12 |
| A | JP 08-170048 A (SANYO CHEMICAL INDUSTRIES, LTD.) 02 July 1996 (1996-07-02) claims 1-5, examples | 1-12 |

☐ Further documents are listed in the continuation of Box C.    ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **08 August 2024** | **20 August 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**
**Information on patent family members**

International application No.
**PCT/JP2024/022287**

| Patent document cited in search report | Publication date (day/month/year) | Patent family member(s) | Publication date (day/month/year) |
|---|---|---|---|
| JP 2013-091767 A | 16 May 2013 | (Family: none) | |
| JP 2014-118531 A | 30 June 2014 | US 2015/0344727 A1<br>claims 1-8, examples<br>WO 2014/098177 A1<br>EP 2937369 A1<br>CN 104884495 A<br>KR 10-2015-0096420 A | |
| WO 2023/008572 A1 | 02 February 2023 | CN 117813334 A<br>claims 1-21, examples<br>KR 10-2024-0039149 A<br>CZ 202472 A3 | |
| JP 08-170048 A | 02 July 1996 | US 5854360 A<br>claims 1-19, examples<br>WO 96/012748 A1<br>EP 0741154 A1<br>DE 69532410 T2<br>CA 2179644 A1<br>KR 10-1996-0706516 A | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP H08170048 A
- JP 508 A